(19) **Europäisches Patentamt / European Patent Office / Office européen des brevets**

(11) **EP 4 606 474 A1**

(12) # EUROPEAN PATENT APPLICATION
published in accordance with Art. 153(4) EPC

(43) Date of publication:
**27.08.2025 Bulletin 2025/35**

(21) Application number: **23880028.8**

(22) Date of filing: **12.09.2023**

(51) International Patent Classification (IPC):
**B01J 23/00** (2006.01)    **B01J 23/02** (2006.01)
**B01J 23/10** (2006.01)    **B01J 21/02** (2006.01)
**B01J 21/06** (2006.01)    **B01J 23/755** (2006.01)
**B01J 37/02** (2006.01)    **B01J 37/08** (2006.01)
**C01B 3/40** (2006.01)

(52) Cooperative Patent Classification (CPC):
**B01J 21/02; B01J 21/06; B01J 23/00; B01J 23/02;
B01J 23/10; B01J 23/755; B01J 37/02;
B01J 37/08; C01B 3/40;** Y02P 20/52

(86) International application number:
**PCT/KR2023/013633**

(87) International publication number:
**WO 2024/085448 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.10.2022 KR 20220134974**

(71) Applicant: **LG Chem, Ltd.**
**Yeongdeungpo-gu**
**Seoul 07336 (KR)**

(72) Inventors:
• **KIM, Yongseon**
  **Daejeon 34122 (KR)**
• **CHO, Jun Yeon**
  **Daejeon 34122 (KR)**

• **CHOI, Jae Soon**
  **Daejeon 34122 (KR)**
• **CHOI, Jun Seon**
  **Daejeon 34122 (KR)**
• **KIM, Sangjin**
  **Daejeon 34122 (KR)**
• **KIM, Sojin**
  **Daejeon 34122 (KR)**
• **KIM, Suji**
  **Daejeon 34122 (KR)**
• **CHOI, Hyun A**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **METHANE-REFORMING CATALYST AND PREPARATION METHOD THEREFOR**

(57)    The catalyst for methane reformation according to an exemplary embodiment of the present application comprises: a porous metal support; a first coating layer provided on the porous metal support and comprising an inorganic oxide; and a second coating layer provided on the first coating layer and comprising the perovskite-based compound represented by Chemical Formula 2, in which the inorganic oxide comprises $CeO_2$ or $Al_2O_3$.

EP 4 606 474 A1

**Description**

[Technical Field]

This application claims priority to and the benefit of Korean Patent Application No. 10-2022-0134974 filed in the Korean Intellectual Property Office on 10/19/2022, the entire contents of which are incorporated herein by reference.
The present application relates to a catalyst for methane reformation and a method for producing the same.

[Background Art]

As part of activities to reduce greenhouse gases caused by global warming, many studies on carbon dioxide conversion technologies have been conducted. The carbon dioxide reforming reaction, one of the carbon dioxide conversion technologies, is a technology to obtain synthesis gas composed of hydrogen and carbon monoxide by reacting methane and carbon dioxide.
Synthesis gas is a material with high development value from diverse downstream raw materials. As a method for industrially obtaining synthesis gas ($H_2$/CO), the reforming reaction of natural gas may be largely divided into a steam reforming process, a carbon dioxide ($CO_2$) reforming process, a catalytic partial oxidation process, an autothermal reforming process, a tri-reforming process, such as the following Reaction Schemes 1 to 5, and the like.

[Reaction Scheme 1] $CH_4 + H_2O \rightarrow 3H_2 + CO$ $\triangle H$ = 226 kJ/mol

[Reaction Scheme 2] $CH_4 + CO_2 \rightarrow 2H_2 + 2CO$ $\triangle H$ = 261 kJ/mol

[Reaction Scheme 3] $CH_4 + 0.5O_2 \rightarrow 2H_2 + CO$ $\triangle H$ = -44 kJ/mol

[Reaction Scheme 4] autothermal reforming: Reaction Scheme 1 + Reaction Scheme 3

[Reaction Scheme 5] tri-reforming: Reaction Scheme 1 + Reaction Scheme 2 + Reaction Scheme 3

Meanwhile, various catalysts may be used for reforming activity in the reforming process. Among them, when noble metal catalysts are used in the reforming process, there is an advantage in that the efficiency of converting natural gas into hydrogen is high, but there is a problem in that the economic feasibility deteriorates because noble metal catalysts are expensive.
Accordingly, nickel catalysts, which have a high hydrogen conversion efficiency and are relatively inexpensive, are usually used in the reforming process. However, in such a case, there is a problem in that the nickel catalyst is deactivated by carbon that is inevitably produced on the surface of the nickel catalyst.
Therefore, there is a need in the art for developing a catalyst which is resistant to carbon deposition and can be effectively applied to the reforming process of methane.

[Detailed Description of the Invention]

[Technical Problem]

The present application has been made in an effort to provide a catalyst for methane reformation and a method for producing the same.

[Technical Solution]

An exemplary embodiment of the present application provides a catalyst for methane reformation, comprising:

a porous metal support;
a first coating layer provided on the porous metal support and comprising an inorganic oxide; and
a second coating layer provided on the first coating layer and comprising a perovskite-based compound represented by the following Chemical Formula 1,
in which the inorganic oxide comprises $CeO_2$ or $Al_2O_3$.

[Chemical Formula 1] $Sr_{1-x}A_xTi_{1-y}B_yO_{3-\delta}$

wherein, in Chemical Formula 1,
A is selected from Y, Sc, La and lanthanide series elements,
B is Cr, Mn, Fe, Co, Ni, Mo, Ru or Rh,
x is a real number of 0 or more and less than 1,
y is a real number of 0 or more and less than 0.5,
$\delta$ is a real number of 0 or more and less than 1, and
$(x + y) > 0$ is satisfied.

Further, another exemplary embodiment of the present application provides a catalyst for methane reformation comprising:

a porous metal support;
a first coating layer provided on the porous metal support and comprising an inorganic oxide; and
a second coating layer provided on the first coating layer and comprising a perovskite-based compound represented by Chemical Formula 1,
in which the first coating layer comprises two or more of Al, Ce, Zr, Y, Ti and Si.

Further, another exemplary embodiment of the present application provides a method for producing a catalyst for methane reformation, the method comprising:

preparing each of a first solution comprising an inorganic oxide precursor; and a second solution comprising a precursor of the perovskite-based compound represented by Chemical Formula 1;
producing a catalyst precursor provided with a first coating layer by coating a porous metal support with the first solution, and then performing a first heat treatment process; and
producing a catalyst provided with a second coating layer by coating the catalyst precursor provided with the first coating layer with the second solution, and then performing a second heat treatment process,
in which a precursor of the inorganic oxide is a precursor of $CeO_2$; a precursor of $Al_2O_3$; or a precursor of a composite oxide comprising two or more of Al, Ce, Zr, Y, Ti and Si.

Further, still another exemplary embodiment of the present application provides a method for producing a catalyst for methane reformation, the method comprising:

preparing each of a 1-1 solution comprising a precursor of a first inorganic oxide; a 1-2 solution comprising a precursor of a second inorganic oxide; and a second solution comprising a precursor of the perovskite-based compound represented by Chemical Formula 1;
producing a catalyst precursor provided with a first inorganic oxide layer by coating a porous metal support with the 1-1 solution, and then performing a 1-1 heat treatment process;
producing a catalyst precursor provided with a second inorganic oxide layer by coating the catalyst precursor provided with the first inorganic oxide layer with the 1-2 solution, and then performing a 1-2 heat treatment process; and
producing a catalyst provided with a second coating layer by coating the catalyst precursor provided with the second inorganic oxide layer with the second solution, and then performing a second heat treatment process,
in which the precursor of the first inorganic oxide and the precursor of the second inorganic oxide are different from each other, and are each independently a precursor of an inorganic oxide comprising one or more of Al, Ce, Zr, Y, Ti and Si.

[Advantageous Effects]

The catalyst for methane reformation according to an exemplary embodiment of the present application can not only improve adhesion between a porous metal support and a second coating layer comprising a perovskite-based compound represented by Chemical Formula 1, but can also prevent side reactions of the porous metal support by forming a primary coating layer comprising an inorganic oxide.
In addition, the catalyst for methane reformation according to an exemplary embodiment of the present application is characterized in that reaction heat is easily controlled compared to pellet-type or powder-type catalysts in the related art because a perovskite-based compound is supported on a porous metal support having high thermal conductivity.
Furthermore, the catalyst for methane reformation according to an exemplary embodiment of the present application is characterized by being able to additionally increase activity because there is a synergistic effect between a first coating layer comprising an inorganic oxide and a second coating layer comprising a perovskite-based compound represented by Chemical Formula 1.

Further, the catalyst for methane reformation according to an exemplary embodiment of the present application can exhibit high activity even at a high space velocity during a reforming reaction of methane because it is possible to increase the active surface area of the catalyst.

[Best Mode]

Hereinafter, the present specification will be described in more detail.

When one member is disposed "on" another member in the present specification, this comprises not only a case where the one member is brought into contact with another member, but also a case where still another member is present between the two members.

When one part "comprises" one constituent element in the present specification, unless otherwise specifically described, this does not mean that another constituent element is excluded, but means that another constituent element may be further comprised.

Currently, in the case of catalysts which are widely used in the field of reformers, generally, powder-type catalysts and pellet-type support catalysts are usually used. Although the powder-type catalysts may have excellent performance due to excellent dispersion degree of the catalyst, it is difficult to directly use the powder-type catalyst in the industry. For example, when a reformer is driven using the powder-type catalyst, the catalyst comes out together with a material produced after the reaction, and in this case, the catalyst in the form of a powder gradually accumulates in the stream tube at the exit portion, and eventually, a phenomenon of blocking the entire tube may occur. Therefore, there is a disadvantage in that the powder-type catalysts cannot be used in the commercial reformers used in the industry.

In addition, the pellet-type support catalyst is currently frequently used in industrial reformers. Due to the limitation of the mass transfer rate, the performance deteriorates compared to the powder-type catalyst only in terms of the catalyst performance, but there is an advantage in that the pellet-type support catalyst can be used for a long period of time because a support is used. However, a $\gamma$-$Al_2O_3$ pellet, which is often used as the pellet-type support catalyst, has a weak structural strength, and thus may be easily broken, and accordingly, there is a disadvantage in that a differential pressure in the reactor is generated. Furthermore, since the volume is large due to the characteristics of the pellet-type support catalyst, the volume thereof becomes considerably large when the pellet-type support catalyst is used in a high-capacity reformer. Further, all reforming reactions are sensitive to reaction temperature, but the existing pellet-type catalyst has a disadvantage in that heat is not evenly distributed throughout the reactor due to a large reduction in thermal conductivity. In addition, since the reforming reaction is very fast, in the case of a pellet-type support or an extruded catalyst, the effectiveness factor of the catalyst is 0.3 or less, so that there is a disadvantage in that the utilization of the catalyst deteriorates.

Thus, the present application intended to alleviate a phenomenon of blocking the stream tube, which is a disadvantage of the powder-type, and improve the heat and mass transfer rates which are a common disadvantage of the powder-type and the pellet-type, through a method of coating a porous metal support having high heat and mass transfer rates with a catalyst. Furthermore, the present application intends to provide a catalyst for methane reformation capable of supporting a large amount of catalyst at one time and suppressing side reactions caused by a binder.

Further, when a noble metal catalyst such as Rh is used as a catalyst for methane reformation, the problem of coke formation may be reduced, but it is difficult to achieve commercialization due to the problem of rising prices. In contrast, although Ni-based catalysts not only exhibit high reactivity but are also inexpensive, they have the problem of deactivating the catalyst due to coke formation resistance, and accordingly, many studies have been conducted to improve coke formation resistance.

In order to improve the above-described coke formation resistance, the present application attempts to appropriately adjust the characteristics of the catalyst. For example, in the dry reforming reaction of methane, when the strength of the acid site of the catalyst is too strong, coke deposition due to the decomposition of methane may be accelerated, and when the strength of the acid site of the catalyst is too weak, reactivity may be lowered by reduced methane decomposition. In order to prevent carbon deposition, the activity of carbon dioxide needs to be increased to promote carbon vaporization, but carbon dioxide, which is an acidic gas, is activated at the base site of the catalyst.

Therefore, the present application attempts to provide a catalyst that balances methane decomposition and carbon oxidation through carbon dioxide activation.

The catalyst for methane reformation according to an exemplary embodiment of the present application comprises: a porous metal support; a first coating layer provided on the porous metal support and comprising an inorganic oxide; and a second coating layer provided on the first coating layer and comprising the perovskite-based compound represented by Chemical Formula 1. In this case, the inorganic oxide comprises $CeO_2$ or $Al_2O_3$.

In addition, the catalyst for methane reformation according to another exemplary embodiment of the present application comprises: a porous metal support; a first coating layer provided on the porous metal support and comprising an inorganic oxide; and a second coating layer provided on the first coating layer and comprising the perovskite-based compound represented by Chemical Formula 1. In this case, the first coating layer comprises two or more of Al, Ce, Zr, Y, Ti and Si.

In an exemplary embodiment of the present application, the first coating layer may be a single layer composed of a composite oxide comprising two or more of Al, Ce, Zr, Y, Ti and Si. Specific examples of the composite oxide comprise yttria-stabilized zirconia (YSZ), $Al_2O_3$-$CeO_2$, $Al_2O_3$-$ZrO_2$, $CeO_2$-$ZrO_2$, $Al_2O_3$-$TiO_2$, $CeO_2$-$TiO_2$, $CeO_2$-$ZrO_2$-$Al_2O_3$, and the like, but are not limited thereto.

In an exemplary embodiment of the present application, the first coating layer may have a double layer structure composed of a first inorganic oxide layer comprising one or more of Al, Ce, Zr, Y, Ti and Si; and a second inorganic oxide layer comprising one or more of Al, Ce, Zr, Y, Ti and Si. In this case, the first inorganic oxide layer and the second inorganic oxide layer comprise different inorganic oxides. The first inorganic oxide layer and the second inorganic oxide layer may each independently comprise $Al_2O_3$, $CeO_2$, $ZrO_2$, $TiO_2$, $ZrO_2$ or $SiO_2$. Furthermore, the double layer structure of the first inorganic oxide layer / the second inorganic oxide layer may be a structure of $Al_2O_3$ / $CeO_2$, a structure of $Al_2O_3$ / $ZrO_2$, a structure of $CeO_2$ / $ZrO_2$, a structure of $Al_2O_3$ / $TiO_2$, a structure of $TiO_2$ / $ZrO_2$, or a structure of $CeO_2$ / $TiO_2$, but is not limited thereto.

When the first coating layer is formed of a single layer composed of composite oxide, the composite oxide may not be distributed uniformly during the firing process after the first coating layer is formed, and the composite oxide is separated, so that the same effect as partially coated with a single oxide may be obtained. Further, when the first coating layer is formed of a double layer of the first inorganic oxide layer and the second inorganic oxide layer, a morphology in which the second inorganic oxide is uniformly distributed on the first organic oxide may be obtained as the ratio is appropriately adjusted.

In particular, when an inorganic oxide capable of forming a strong bond with a metal that is the main component of a porous metal support is formed as a first inorganic oxide layer, the exposure of the metal component of the porous metal support to the second inorganic oxide layer may be reduced, so that the characteristics of the second inorganic oxide may more efficiently affect the second coating layer comprising a perovskite-based compound.

In an exemplary embodiment of the present application, the porous metal support may be a metal foam comprising NiCrAlFe, NiCrAl, SiC or $\alpha$-$Al_2O_3$.

The porous metal support is a structural body having various shapes, has a small heat capacity and an excellent heat transfer ability, and thus may be molded into a desired shape for use. The form, size and the like of the porous metal support are not particularly limited, and the porous metal support may have a porosity of 10% to 99%, 50% to 96%, and 85% to 96%. The porous metal support may have a pore size (cell size) of 400 $\mu$m to 1,500 $\mu$m, and 450 $\mu$m to 1,400 $\mu$m. When the porous metal support has a pore size of less than 400 $\mu$m, it may be difficult to coat the porous metal support with a precursor solution, and when the porous metal support has a pore size of more than 1,500 $\mu$m, the surface area on which the catalyst can be coated is reduced, so that the pore size range is not preferred because the range may be disadvantageous in the process. The porous metal support may be appropriately produced by those skilled in the art using methods known in the art, in consideration of the material, pore size, porosity, and the like of the porous metal support.

In an exemplary embodiment of the present application, the first coating layer may be composed of an inorganic oxide alone, and the second coating layer may be composed of a perovskite-based compound represented by Chemical Formula 1 alone.

In an exemplary embodiment of the present application, a total content of the first coating layer comprising the inorganic oxide may be 1 wt% to 15 wt%, and 2 wt% to 13 wt% based on the total weight of the porous metal support. When the total content of the first coating layer comprising the inorganic oxide exceeds 15 wt%, the remaining capacity capable of forming a second coating layer comprising the perovskite-based compound represented by Chemical Formula 1 may be reduced, and accordingly, the aforementioned weight range is not preferred because the activity of the catalyst may be reduced compared to the volume of the porous metal support. In addition, when the total content of the first coating layer comprising the inorganic oxide is less than 1 wt%, it may be difficult to obtain the effect caused by the first coating layer because the content is so small.

In an exemplary embodiment of the present application, the weight ratio of the first coating layer : the second coating layer may be 1 : 5 to 1 : 20, and 1 : 7 to 1 : 15. The case where the weight ratio of the first coating layer : the second coating layer is out of the range is not preferred because the activity of the catalyst may be reduced compared to the volume of the porous metal support.

In an exemplary embodiment of the present application, a content of the second coating layer comprising the perovskite-based compound represented by Chemical Formula 2 may be 3 wt% to 40 wt%, 6 wt% to 35 wt%, and 7 wt% to 30 wt%, based on a total weight of the catalyst for methane reformation. When the content of the second coating layer comprising the perovskite-based compound represented by Chemical Formula 2 is less than 3 wt% based on the total weight of the catalyst for methane reformation, the reactivity may be lowered due to relatively few active sites on the catalyst surface, so the content is not preferred. Furthermore, when the content of the second coating layer comprising the perovskite-based compound represented by Chemical Formula 1 exceeds 40 wt%, a relatively large amount of the catalyst component is contained compared to the porous metal support, making it difficult to maintain the pore structure, it may not be easy to bond the catalyst component to the porous metal support, and accordingly, the practical benefits of the methane reforming reaction may be reduced.

In an exemplary embodiment of the present application, the first coating layer may be provided on the entire surface on the porous metal support.

In an exemplary embodiment of the present application, at least a portion of the surface of the catalyst for methane reformation may comprise protrusion shapes. The protrusion shape may be spherical, elliptical, or a combination thereof, but is not limited thereto.

In an exemplary embodiment of the present application, the first coating layer comprising the inorganic oxide may serve to fix the second coating layer comprising the perovskite-based compound represented by Chemical Formula 1 on the porous metal support. Further, the second coating layer comprising the perovskite-based compound represented by Chemical Formula 1 may be present in the form of protrusions on the first coating layer, and accordingly, the performance of the methane reforming reaction may be improved by increasing the reaction surface area of the catalyst.

In addition, according to an exemplary embodiment of the present application, by simultaneously applying the first coating layer comprising the inorganic oxide; and the second coating layer comprising the perovskite-based compound represented by Chemical Formula 1, the total content of catalyst supported on the porous metal support may be increased compared to when catalyst particles are applied alone. Furthermore, according to an exemplary embodiment of the present application, the durability and performance of the catalyst may be improved because it is possible to prevent a phenomenon in which a metal (Ni, Cr, and the like) that is the main component of the porous metal support is exposed to the surface in the form of a metal oxide ($NiO$, $Cr_2O_3$, and the like) under long-term operation conditions at high temperature (750°C or higher) and prevent the changes in a component proportion or phase of the catalyst of Chemical Formula 1 by applying the first coating layer comprising the inorganic oxide.

In an exemplary embodiment of the present application, the catalyst for methane reformation may be applied to a steam reforming process, a carbon dioxide ($CO_2$) reforming process, a catalytic partial oxidation process, an autothermal reforming process, a tri-reforming process or a mixed reforming process, and the methane reforming process is not particularly limited.

The method for producing a catalyst for methane reformation according to an exemplary embodiment of the present application comprises: preparing each of a first solution comprising a precursor of an inorganic oxide; and a second solution comprising a precursor of the perovskite-based compound represented by Chemical Formula 1; producing a catalyst precursor provided with a first coating layer by coating a porous metal support with the first solution, and then performing a first heat treatment process; and producing a catalyst provided with a second coating layer by coating the catalyst precursor provided with the first coating layer with the second solution, and then performing a second heat treatment process. In this case, the precursor of the inorganic oxide is a precursor of $CeO_2$; a precursor of $Al_2O_3$; or a precursor of a composite oxide comprising two or more of Al, Ce, Zr, Y, Ti and Si.

Further, the method for producing a catalyst for methane reformation according to another exemplary embodiment of the present application comprises: preparing each of a 1-1 solution comprising a precursor of a first inorganic oxide; a 1-2 solution comprising a precursor of a second inorganic oxide; and a second solution comprising a precursor of the perovskite-based compound represented by Chemical Formula 1; producing a catalyst precursor provided with a first inorganic oxide layer by coating a porous metal support with the 1-1 solution, and then performing a 1-1 heat treatment process; producing a catalyst precursor provided with a second inorganic oxide layer by coating the catalyst precursor provided with the first inorganic oxide layer with the 1-2 solution, and then performing a 1-2 heat treatment process; and producing a catalyst provided with a second coating layer by coating the catalyst precursor provided with the second inorganic oxide layer with the second solution, and then performing a second heat treatment process. In this case, the precursor of the first inorganic oxide and the precursor of the second inorganic oxide are different from each other, and are each independently a precursor of an inorganic oxide comprising one or more of Al, Ce, Zr, Y, Ti and Si.

In the method for producing a catalyst for methane reformation according to an exemplary embodiment of the present application, details on the porous metal support, the perovskite-based compound represented by Chemical Formula 1, the inorganic oxide, and the like are the same as those as described above.

In particular, the second solution comprising the precursor of the perovskite-based compound represented by Chemical Formula 1 may be each applied in the form of a sol or gel. Furthermore, the first solution comprising the precursor of the inorganic oxide may be provided in the form of not only an inorganic oxide dispersion, but also a sol, gel or solution comprising a precursor of an inorganic oxide. As the solvent for the solution comprising the precursor of the inorganic oxide, not only water but also a solvent known in the art may be applied, and the solvent is not particularly limited.

The precursor of the perovskite-based compound is a precursor of the metal constituting the perovskite-based compound, and the metal molar ratio of the perovskite-based compound may be adjusted by adjusting the content thereof. In addition, the precursor of the metal is not particularly limited, and ammonium salts, nitrates, carbonates, chlorides, lactates, hydroxides, organic acid salts, oxides of the metal elements, or mixtures thereof may be applied in combination.

The precursor of the inorganic oxide is not particularly limited, and ammonium salts, nitrates, carbonates, chlorides, lactates, hydroxides, organic acid salts, and oxides of the inorganic materials, or mixtures thereof may be applied in combination.

The method for producing a catalyst for methane reformation according to an exemplary embodiment of the present application comprises preparing each of a first solution comprising a precursor of an inorganic oxide; and a second solution comprising a precursor of the perovskite-based compound represented by Chemical Formula 1.

Furthermore, the method for producing a catalyst for methane reformation according to another exemplary embodiment of the present application comprises preparing each of a 1-1 solution comprising a precursor of a first inorganic oxide; a 1-2 solution comprising a precursor of a second inorganic oxide; and a second solution comprising a precursor of the perovskite-based compound represented by Chemical Formula 1.

The first solution, the 1-1 solution, the 1-2 solution and the second solution may each independently further comprise a solvent, and as the solvent, a solvent known in the art may be applied, and is not particularly limited thereto. Further, the first solution, the 1-1 solution and the 1-2 solution may further comprise an organic dispersant, and as the organic dispersant, an organic dispersant known in the art may be applied, and is not particularly limited thereto.

The method for producing a catalyst for methane reformation according to an exemplary embodiment of the present application comprises: producing a catalyst precursor provided with a first coating layer by coating a porous metal support with the first solution, and then performing a first heat treatment process; and producing a catalyst provided with a second coating layer by coating the catalyst precursor provided with the first coating layer with the second solution, and then performing a second heat treatment process.

In addition, the method for producing a catalyst for methane reformation according to another exemplary embodiment of the present application comprises: producing a catalyst precursor provided with a first inorganic oxide layer by coating a porous metal support with the 1-1 solution, and then performing a 1-1 heat treatment process; producing a catalyst precursor provided with a second inorganic oxide layer by coating the catalyst precursor provided with the first inorganic oxide layer with the 1-2 solution, and then performing a 1-2 heat treatment process; and producing a catalyst provided with a second coating layer by coating the catalyst precursor provided with the second inorganic oxide layer with the second solution, and then performing a second heat treatment process.

As the coating method of the first solution, the 1-1 solution, the 1-2 solution and the second solution, methods known in the art may be used, and dip-coating, wash-coating and the like may be used, but the method is not limited thereto.

The first heat treatment process, the 1-1 heat treatment process, the 1-2 heat treatment process and the second heat treatment process may each independently comprise performing drying and firing. The drying may be performed at a temperature of 50°C to 150°C for 1 hour to 48 hours, and may be performed at a temperature of 60°C to 100°C for 5 hours to 36 hours, but is not limited thereto. Further, the firing may be performed at a temperature of 350°C to 1,100°C for 1 hour to 10 hours in an air atmosphere, and may be performed at a temperature of 500°C to 1,000°C for 1.5 hours to 8 hours in an air atmosphere, but is not limited thereto. When the firing is performed at a temperature less than 350°C, the perovskite phase may not be properly formed, and when the firing is performed at a temperature more than 1,100°C, the durability of the porous metal support may deteriorate, so that the temperature is not preferred.

In an exemplary embodiment of the present application, the method may further comprise measuring the weight of the second coating layer supported on the porous metal support after the second heat treatment process. In addition, by measuring the weight of the second coating layer supported on the porous metal support, the coating of the catalyst precursor provided with the second inorganic oxide layer with the above-described second solution, and then the performing of the second heat treatment process may be performed repeatedly 2 to 10 times until a desired amount of catalyst is supported on the porous metal support.

The catalyst for methane reformation according to an exemplary embodiment of the present application can not only improve adhesion between a porous metal support and a second coating layer comprising a perovskite-based compound represented by Chemical Formula 1, but can also prevent side reactions of the porous metal support by forming a primary coating layer comprising an inorganic oxide.

In addition, the catalyst for methane reformation according to an exemplary embodiment of the present application is characterized in that reaction heat is easily controlled compared to pellet-type or powder-type catalysts in the related art because a perovskite-based compound is supported on a porous metal support having high thermal conductivity.

Furthermore, the catalyst for methane reformation according to an exemplary embodiment of the present application is characterized by being able to additionally increase activity because there is a synergistic effect between a first coating layer comprising an inorganic oxide and a second coating layer comprising a perovskite-based compound represented by Chemical Formula 1.

Further, the catalyst for methane reformation according to an exemplary embodiment of the present application can exhibit high activity even at a high space velocity during a reforming reaction of methane because it is possible to increase the active surface area of the catalyst.

[Mode for Invention]

Hereinafter, the present application will be described in detail with reference to Examples for specifically describing the present application. However, the Examples according to the present application may be modified in various forms, and it is not interpreted that the scope of the present application is limited to the Examples described in detail below. The Examples of the present application are provided for more completely explaining the present application to the person with ordinary skill in the art.

<Examples>

<Example 1>

1) Preparation of first solution

An aqueous solution comprising 40 wt% of $Ce(NO_3)_3 \cdot 6H_2O$ was prepared.

2) Preparation of second solution comprising precursor of perovskite-based compound ($Sr_{0.92}Y_{0.08}Ti_{0.97}Ni_{0.03}O_{3-\delta}$, 0 < $\delta$ < 1) represented by Chemical Formula 1

A solution comprising a precursor of a perovskite compound ($Sr_{0.92}Y_{0.08}Ti_{0.97}Ni_{0.03}O_{3-\delta}$) was prepared by the citrate method. Strontium nitrate ($Sr(NO_3)_3 \cdot H_2O$) was dissolved in distilled water along with yttrium nitrate ($Y(NO_3)_2$), nickel nitrate ($Y(NO_3)_2$) and citric acid. After titanium isopropoxide ($Ti(OCH(CH_3)_2)_4$) was dissolved in ethylene glycol, the two solutions were mixed at 70°C. Thereafter, after the mixture was stirred for 3 hours, the mixture was cooled to room temperature and stored. In this case, the concentration of the solution was 0.1 M, the molar ratio of strontium : yttrium was 0.92 : 0.08, and the molar ratio of titanium : nickel was 0.97 : 0.03.

3) Production of catalyst for methane reformation

A porous metal support (NiCrAl, average pore size: 1,200 $\mu$m) was dip-coated with the first solution (formation of a first coating layer), and then dried at 150°C for 5 hours, and heat-treated at 900°C in an air atmosphere for 5 hours. The dip-coating, drying, and heat treatment of the first solution were performed once or repeated several times.
Thereafter, the porous metal support in which the first coating layer was formed was dip-coated with the second solution (formation of a second coating layer), and then dried at 150°C for 5 hours, and heat-treated at 900°C in an air atmosphere for 5 hours. The dip-coating, drying and heat treatment of the second solution was repeated several times to finally produce a catalyst in which a first coating layer ($CeO_2$) and a second coating layer ($Sr_{0.92}Y_{0.08}Ti_{0.97}Ni_{0.03}O_{3-\delta}$, 0 < $\delta$ < 1) were provided on a porous metal support. Based on the total weight of the catalyst for methane reformation, the content of the first coating layer ($CeO_2$) was 8 wt%, and the content of the perovskite-based compound ($Sr_{0.92}Y_{0.08}Ti_{0.97}Ni_{0.03}O_{3-\delta}$, 0 < $\delta$ < 1) represented by Chemical Formula 1 was 15 wt%.
The content of the first coating layer and the content of the perovskite-based compound represented by Chemical Formula 1 may be calculated by the following Equations 1 and 2.

Content (wt%) of first coating layer = (total weight after forming first coating layer - weight of porous metal support)/(total weight of catalyst) $\times$ 100          [Equation 1]

Content (wt%) of perovskite-based compound represented by Chemical Formula 1 = (total weight of catalyst - total weight after forming first coating layer)/(total weight of catalyst) $\times$ 100          [Equation 2]

<Example 2>

A process was performed in the same manner as in Example 1, except that the precursor was used such that the molar ratio of strontium : yttrium : titanium : nickel became 0.88 : 0.12 : 0.90 : 0.10 during the preparation of the second solution.

<Example 3>

A process was performed in the same manner as in Example 2, except that the precursor was used such that the molar ratio of titanium : nickel became 0.80 : 0.20 during the preparation of the second solution.

<Example 4>

A process was performed in the same manner as in Example 1, except that ruthenium chloride (RuCl$_3$) was used instead of nickel nitrate such that the molar ratio of titanium : ruthenium became 0.85 : 0.15 during the preparation of the second solution.

<Example 5>

A process was performed in the same manner as in Example 1, except that the first coating layer of AlO$_3$ was formed using Al(NO$_3$)$_3$·9H$_2$O (25 wt%) instead of Ce(NO$_3$)$_3$·6H$_2$O during the preparation of the first solution.

**<Example 6>**

A process was performed in the same manner as in Example 2, except that the first coating layer of AlO$_3$ was formed using Al(NO$_3$)$_3$·9H$_2$O (25 wt%) instead of Ce(NO$_3$)$_3$·6H$_2$O during the preparation of the first solution.

**<Example 7>**

A process was performed in the same manner as in Example 3, except that the first coating layer of AlO$_3$ was formed using Al(NO$_3$)$_3$·9H$_2$O (25 wt%) instead of Ce(NO$_3$)$_3$·6H$_2$O during the preparation of the first solution.

**<Example 8>**

A process was performed in the same manner as in Example 4, except that the first coating layer of AlO$_3$ was formed using Al(NO$_3$)$_3$·9H$_2$O (25 wt%) instead of Ce(NO$_3$)$_3$·6H$_2$O during the preparation of the first solution.

**<Example 9>**

A process was performed in the same manner as in Example 3, except that a suspension in which yttria stabilized zirconia (YSZ, the molar ratio of Zr : Y was 0.92 : 0.08) was dispersed in 10 wt% of water was used instead of an aqueous solution comprising 40 wt% of the first solution Ce(NO$_3$)$_3$·6H$_2$O during the preparation of the first solution.

**<Example 10>**

A process was performed in the same manner as in Example 4, except that a suspension in which yttria stabilized zirconia (YSZ, the molar ratio of Zr : Y was 0.92 : 0.08) was dispersed in 10 wt% of water was used instead of an aqueous solution comprising 40 wt% of the first solution Ce(NO$_3$)$_3$·6H$_2$O during the preparation of the first solution.

**<Example 11>**

A process was performed in the same manner as in Example 3, except that an aqueous solution using each nitrate was used, such that the molar ratio of Ce : Zr : Al in the solution was 0.45 : 0.45 : 0.1, instead of an aqueous solution comprising 40 wt% of the first solution Ce(NO$_3$)$_3$·6H$_2$O during the preparation of the first solution.

**<Example 12>**

A process was performed in the same manner as in Example 4, except that an aqueous solution using each nitrate was used, such that the molar ratio of Ce : Zr : Al in the solution was 0.45 : 0.45 : 0.1, instead of an aqueous solution comprising 40 wt% of the first solution Ce(NO$_3$)$_3$·6H$_2$O during the preparation of the first solution.

**<Example 13>**

A process was performed in the same manner as in Example 3, except that an aqueous solution using each nitrate was used, such that the molar ratio of Al : Ce in the solution was 0.3 : 0.7, during the preparation of the first solution.

**<Example 14>**

A process was performed in the same manner as in Example 4, except that an aqueous solution using each nitrate was used, such that the molar ratio of Al : Ce in the solution was 0.3 : 0.7, during the preparation of the first solution.

**<Example 15>**

An aqueous solution comprising 40 wt% of $Ce(NO_3)_3 \cdot 6H_2O$ was prepared as a 1-1 solution, and a porous metal support (NiCrAl, average pore size: 1200 $\mu$m) was dip-coated with the aqueous solution (formation of a 1-1 coating layer), and then dried at 150°C for 5 hours, and then heat-treated at 900°C in an air atmosphere for 5 hours. The dip-coating, drying, and heat treatment of the 1-1 solution were performed once or repeated several times. Thereafter, an aqueous solution comprising 25 wt% of $Al(NO_3)_3 \cdot 9H_2O$ was prepared as a 1-2 solution, and a porous metal support in which a 1-1 coating layer was formed was dip-coated with the aqueous solution (formation of a 1-2 coating layer), and then dried at 150°C for 5 hours, and then heat-treated at 900°C in an air atmosphere for 5 hours. The dip-coating, drying, and heat treatment of the 1-2 solution were performed once or repeated several times.

Thereafter, the porous metal support in which the 1-2 coating layer was formed was dip-coated with the second solution applied in Example 3 (formation of a second coating layer), and then dried at 150°C for 5 hours, and heat-treated at 900°C in an air atmosphere for 5 hours. The dip-coating, drying and heat treatment of the second solution were repeated several times to finally produce a catalyst in which the 1-1 coating layer ($CeO_2$), the 1-2 coating layer ($Al_2O_3$) and the second coating layer ($Sr_{0.88}Y_{0.12}Ti_{0.80}Ni_{0.20}O_{3-\delta}$, $0 < \delta < 1$) were provided on the porous metal support.

The content of the 1-1 coating layer, the content of the 1-2 coating layer, and the content of the perovskite-based compound represented by Chemical Formula 1 may be calculated using the following Equations 3 to 5.

Content (wt%) of 1-1 coating layer = (total weight after forming 1-1 coating layer - weight of porous metal support)/(total weight of catalyst) $\times$ 100     [Equation 3]

Content (wt%) of 1-2 coating layer = (total weight after forming 1-2 coating layer - total weight after forming 1-1 coating layer)/(total weight of catalyst) $\times$ 100     [Equation 4]

Content (wt%) of perovskite-based compound represented by Chemical Formula 1 = (total weight of catalyst - total weight after forming 1-2 coating layer)/(total weight of catalyst) $\times$ 100     [Equation 5]

**<Example 16>**

A process was performed in the same manner as in Example 7, except that as the porous metal support, NiFeCrAl (average pore size: 1,200 $\mu$m) was applied instead of NiCrAl.

**<Comparative Example 1>**

A porous metal support (NiCrAl, average pore size: 1,200 $\mu$m) alone was used as Comparative Example 1.

**<Comparative Example 2>**

A process was performed in the same manner as in Example 3, except that the coating with the second solution alone was applied without the coating with the first solution.

**<Comparative Example 3>**

A process was performed in the same manner as in Example 1, except that the coating with the first solution alone was applied without the coating with the second solution.

**<Comparative Example 4>**

A process was performed in the same manner as in Example 5, except that the coating with the first solution alone was applied without the coating with the second solution.

**<Comparative Example 5>**

A process was performed in the same manner as in Example 9, except that the coating with the first solution alone was applied without the coating with the second solution.

The configurations of the porous metal supports, the first coating layer and the second coating layer in the Examples and Comparative Examples are shown in the following Table 1.

[Table 1]

| | Porous metal support | First coating layer | Second coating layer |
|---|---|---|---|
| Example 1 | NiCrAl | $CeO_2$ | $Sr_{0.92}Y_{0.08}Ti_{0.97}Ni_{0.03}O_{3-\delta}$ |
| Example 2 | NiCrAl | $CeO_2$ | $Sr_{0.88}Y_{0.12}Ti_{0.90}Ni_{0.10}O_{3-\delta}$ |
| Example 3 | NiCrAl | $CeO_2$ | $Sr_{0.88}Y_{0.12}Ti_{0.80}Ni_{0.20}O_{3-\delta}$ |
| Example 4 | NiCrAl | $CeO_2$ | $Sr_{0.92}Y_{0.08}Ti_{0.85}Ru_{0.15}O_{3-\delta}$ |
| Example 5 | NiCrAl | $Al_2O_3$ | $Sr_{0.92}Y_{0.08}Ti_{0.97}Ni_{0.03}O_{3-\delta}$ |
| Example 6 | NiCrAl | $Al_2O_3$ | $Sr_{0.88}Y_{0.12}Ti_{0.12}Ni_{0.10}O_{3-\delta}$ |
| Example 7 | NiCrAl | $Al_2O_3$ | $Sr_{0.88}Y_{0.12}Ti_{0.80}Ni_{0.20}O_{3-\delta}$ |
| Example 8 | NiCrAl | $Al_2O_3$ | $Sr_{0.92}Y_{0.08}Ti_{0.85}Ru_{0.15}O_{3-\delta}$ |
| Example 9 | NiCrAl | YSZ | $Sr_{0.88}Y_{0.12}Ti_{0.80}Ni_{0.20}O_{3-\delta}$ |
| Example 10 | NiCrAl | YSZ | $Sr_{0.92}Y_{0.08}Ti_{0.85}Ru_{0.15}O_{3-\delta}$ |
| Example 11 | NiCrAl | $CeO_2$-$ZrO_2$-$Al_2O_3$ (the molar ratio of Ce:Zr:Al is 0.45:0.45:0.1) | $Sr_{0.88}Y_{0.12}Ti_{0.80}Ni_{0.20}O_{3-\delta}$ |
| Example 12 | NiCrAl | $CeO_2$-$ZrO_2$-$Al_2O_3$ (the molar ratio of Ce:Zr:Al is 0.45:0.45:0.1) | $Sr_{0.92}Y_{0.08}Ti_{0.85}Ru_{0.15}O_{3-\delta}$ |
| Example 13 | NiCrAl | $Al_2O_3$-$CeO_2$ (the molar ratio of Al:Ce is 0.3:0.7) | $Sr_{0.88}Y_{0.12}Ti_{0.80}Ni_{0.20}O_{3-\delta}$ |
| Example 14 | NiCrAl | $Al_2O_3$-$CeO_2$ (the molar ratio of Al:Ce is 0.3:0.7) | $Sr_{0.92}Y_{0.08}Ti_{0.85}Ru_{0.15}O_{3-\delta}$ |
| Example 15 | NiCrAl | 1-1 coating layer: $CeO_2$ 1-2 coating layer: $Al_2O_3$ (the molar ratio of Ce:Al is 0.8:0.2) | $Sr_{0.88}Y_{0.12}Ti_{0.80}Ni_{0.20}O_{3-\delta}$ |
| Example 16 | NiFeCrAl | $Al_2O_3$ | $Sr_{0.88}Y_{0.12}Ti_{0.80}Ni_{0.20}O_{3-\delta}$ |
| Comparative Example 1 | NiCrAl | - | - |
| Comparative Example 2 | NiCrAl | - | $Sr_{0.88}Y_{0.12}Ti_{0.80}Ni_{0.20}O_{3-\delta}$ |
| Comparative Example 3 | NiCrAl | $CeO_2$ | - |
| Comparative Example 4 | NiCrAl | $Al_2O_3$ | - |
| Comparative Example 5 | NiCrAl | YSZ | - |

**<Experimental Example 1> Evaluation of dry reforming reaction of methane**

A fixed-bed reactor system was introduced to carry out a dry reforming reaction of methane. A Quartz tube reactor (inner diameter = 1/2 inch, length = 50 cm) was used and packed with each catalyst (about 2g) of the Examples and the Comparative Examples. First, after the catalyst underwent a reduction process at 800°C under 10% $H_2/N_2$ conditions for 2 hours, a catalytic reaction was performed for 100 hours.

Gas composition: $CH_4$ : $CO_2$ : $N_2$ = 1 : 1.12 : 0.96
Flow rate: gas hour space velocity (GHSV) = 1,500 $hr^{-1}$ (based on $CH_4$)
Reaction temperature: 800°C
Reaction pressure: 1 bar

A reaction conversion rate after 100 hours of reaction was calculated by analyzing the composition of the produced gas using gas chromatography (GC), and is shown in the following Table 2.

$$\text{Conversion rate } (Xi, \%) = [(Fi_{in} - Fi_{out}) / Fi_{in}] \times 100 \ (Fi = \text{flow rate of i})$$

**<GC analysis conditions>**

1) GC model: Agilent 6890
2) Oven temp.: 40°C/7 min-90°C/5 min-180°C/6 min
3) Detector: TCD, 250°C
4) Sample loop: 0.25 mL
5) Valve box Temp.: 150°C

[Table 2]

| Catalyst type | $CH_4$ conversion rate (%) | $CO_2$ conversion rate (%) | $H_2$/CO |
|---|---|---|---|
| Example 1 | 91 | 90 | 0.82 |
| Example 2 | 91 | 90 | 0.84 |
| Example 3 | 93 | 92 | 0.87 |
| Example 4 | 92 | 92 | 0.87 |
| Example 5 | 94 | 90 | 0.92 |
| Example 6 | 95 | 90 | 0.94 |
| Example 7 | 96 | 92 | 0.95 |
| Example 8 | 96 | 92 | 0.92 |
| Example 9 | 93 | 90 | 0.90 |
| Example 10 | 92 | 90 | 0.89 |
| Example 11 | 93 | 91 | 0.89 |
| Example 12 | 92 | 91 | 0.88 |
| Example 13 | 93 | 91 | 0.91 |
| Example 14 | 93 | 90 | 0.89 |
| Example 15 | 93 | 89 | 0.89 |
| Example 16 | 95 | 91 | 0.92 |
| Comparative Example 1 | 20 | 23 | 0.54 |
| Comparative Example 2 | 88 | 89 | 0.83 |
| Comparative Example 3 | 0 | 0 | - |
| Comparative Example 4 | 0 | 0 | - |
| Comparative Example 5 | 0 | 0 | - |
| Comparative Example 6 | 0 | 0 | - |

**<Experimental Example 2> Evaluation of dry reforming reaction of methane**

A fixed-bed reactor system was introduced to carry out a dry reforming reaction of methane. A Quartz tube reactor (inner diameter = 1/2 inch, length = 50 cm) was used and packed with each catalyst (about 2g) of the Examples and the Comparative Examples. First, after the catalyst underwent a reduction process at 800°C under 10% $H_2$/$N_2$ conditions for 2 hours, a catalytic reaction was performed for 100 hours. In order to more clearly compare the differences in coke formation between catalysts, the activity characteristics of the catalysts were evaluated under pressurized conditions.

Gas composition: $CH_4 : CO_2 : N_2$ = 1 : 1.12 : 0.96 or 1 : 1.4 : 0.96
Flow rate: gas hour space velocity (GHSV) = 1,500 $hr^{-1}$ (based on $CH_4$)
Reaction temperature: 850°C
Reaction pressure: 4 barg

A reaction conversion rate after 100 hours of reaction was calculated by analyzing the composition of the produced gas using gas chromatography (GC), and is shown in the following Table 3.

$$\text{Conversion rate } (Xi, \%) = [(Fi_{in} - Fi_{out}) / Fi_{in}] \times 100 \ (Fi = \text{flow rate of } i)$$

The coke formation rate was calculated using the following equation.

Coke (%) = (weight of catalyst after reaction - weight of initial catalyst)/(weight of catalyst after reaction) $\times$ 100

<GC analysis conditions>

1) GC model: Agilent 6890
2) Oven temp.: 40°C/7 min-90°C/5 min-180°C/6 min
3) Detector: TCD, 250°C
4) Sample: 0.25 mL
5) Valve box Temp.: 150°C

[Table 3]

| Catalyst type | $CO_2/CH_4$ | $CH_4$ conversion rate (%) | $CO_2$ conversion rate (%) | $H_2/CO$ | Amount of coke produced (wt%) |
|---|---|---|---|---|---|
| Example 3 | 1.12 | 85 | 89 | 0.95 | 2.82 |
| | 1.4 | 91 | 81 | 0.86 | 1.08 |
| Example 7 | 1.12 | 87 | 88 | 0.95 | 3.25 |
| | 1.4 | 94 | 78 | 0.85 | 10.32 |
| Example 9 | 1.4 | 93 | 78 | 0.86 | 6.50 |
| Example 11 | 1.4 | 92 | 79 | 0.87 | 2.10 |
| Example 13 | 1.4 | 92 | 80 | 0.86 | 4.9 |
| Example 15 | 1.4 | 93 | 80 | 0.86 | 3.11 |
| Comparative Example 2 | 1.4 | 83.8 | 75.6 | 0.85 | 16.22 |

As in the results of Tables 2 and 3, it can be confirmed that the catalyst for methane reformation according to an exemplary embodiment of the present application, which comprises the porous metal support, a first coating layer comprising an inorganic oxide, and a second coating layer comprising the perovskite-based compound represented by Chemical Formula 1, has excellent $CH_4$ conversion rate and $CO_2$ conversion rate and has an improved $H_2/CO$ rate, compared to the Comparative Examples which do not comprise this configuration.

In particular, it can be confirmed that during a catalyst reaction under pressurized conditions, the catalyst for methane reformation according to an exemplary embodiment of the present application, which comprises the porous metal support, a first coating layer comprising an inorganic oxide, and a second coating layer comprising the perovskite-based compound represented by Chemical Formula 1, has a remarkably reduced amount of coke formed compared to the Comparative Examples which do not comprise this configuration. Accordingly, it can be confirmed that by forming a first coating layer comprising an inorganic oxide on a porous metal support in the exemplary embodiments of the present application, side reactions caused by a second coating layer comprising a porous metal support and a perovskite-based compound have been reduced.

<Experimental Example 3> Evaluation of base site of catalyst

A $CO_2$ adsorption system (BELCAT II) was introduced to evaluate the base site of a catalyst. A Quartz cell was used to fill the catalysts (about 0.1 g) of each of the Examples and the Comparative Examples. After the catalyst was subjected to a reduction process at 800°C for 2 hours under 5% $H_2$/Ar conditions, adsorption was conducted by injecting $CO_2$ pulses (0.0086 $cm^3$ [STP]/pulse) at predetermined time intervals at 50°C. In this case, adsorption was sufficiently conducted until the area of a $CO_2$ peak that passed through the catalyst was not changed any more. The amount of $CO_2$ adsorbed during each pulse injection was determined using the area of a $CO_2$ peak that was not adsorbed and passed through the catalyst using a TCD detector. The total amount of $CO_2$ adsorbed in each pulse is shown in the following Table 4.

Amount of $CO_2$ adsorbed ($cm^3$ [STP]/$g_{cat}$) = [($A_{sat}$ - $A_1$) + ($A_{sat}$ - $A_2$) + ... ] /$A_{sat}$ $\times$ 0.0086 (amount of $CO_2$ pulse injected, $cm^3$ [STP])/$g_{cat}$

($A_{sat}$ = area of $CO_2$ peak after sufficient adsorption, $A_n$ = area of $CO_2$ peak at the time of nth pulse injection, and $g_{cat}$ = weight of catalyst)

[Table 4]

| Catalyst type | Amount of $CO_2$ adsorbed ($cm^3$ [STP] / $g_{cat}$) |
|---|---|
| Example 3 | 0.120 |
| Example 11 | 0.043 |
| Comparative Example 1 | 0.000 |
| Comparative Example 2 | 0.035 |

As in the results of Table 4, it can be confirmed that the catalyst for methane reformation according to an exemplary embodiment of the present application, which comprises the porous metal support, a first coating layer comprising an inorganic oxide, and a second coating layer comprising the perovskite-based compound represented by Chemical Formula 1, exhibits a large amount of $CO_2$ adsorbed compared to the Comparative Examples which do not comprise this configuration.

Therefore, the catalyst for methane reformation according to an exemplary embodiment of the present application can not only improve adhesion between a porous metal support and a second coating layer comprising a perovskite-based compound represented by Chemical Formula 1, but can also prevent side reactions of the porous metal support by forming a primary coating layer comprising an inorganic oxide.

**In** addition, the catalyst for methane reformation according to an exemplary embodiment of the present application is characterized in that reaction heat is easily controlled compared to pellet-type or powder-type catalysts in the related art because a perovskite-based compound is supported on a porous metal support having high thermal conductivity.

Furthermore, the catalyst for methane reformation according to an exemplary embodiment of the present application is characterized by being able to additionally increase activity because there is a synergistic effect between a first coating layer comprising an inorganic oxide and a second coating layer comprising a perovskite-based compound represented by Chemical Formula 1.

Further, the catalyst for methane reformation according to an exemplary embodiment of the present application can exhibit high activity even at a high space velocity during a reforming reaction of methane because it is possible to increase the active surface area of the catalyst.

**Claims**

1.    A catalyst for methane reformation, comprising:

   a porous metal support;
   a first coating layer provided on the porous metal support and comprising an inorganic oxide; and
   a second coating layer provided on the first coating layer and comprising a perovskite-based compound represented by the following Chemical Formula 1,
   wherein the inorganic oxide comprises $CeO_2$ or $Al_2O_3$:

   [Chemical Formula 1]          $Sr_{1-x}A_xTi_{1-y}B_yO_{3-\delta}$

wherein, in Chemical Formula 1,
A is selected from Y, Sc, La and lanthanide series elements,
B is Cr, Mn, Fe, Co, Ni, Mo, Ru or Rh,
x is a real number of 0 or more and less than 1,
y is a real number of 0 or more and less than 0.5,
$\delta$ is a real number of 0 or more and less than 1, and
$(x + y) > 0$ is satisfied.

2. A catalyst for methane reformation, comprising:

a porous metal support;
a first coating layer provided on the porous metal support and comprising an inorganic oxide; and
a second coating layer provided on the first coating layer and comprising a perovskite-based compound represented by the following Chemical Formula 1,
wherein the first coating layer comprises two or more of Al, Ce, Zr, Y, Ti and Si:

[Chemical Formula 1] $\quad Sr_{1-x}A_xTi_{1-y}B_yO_{3-\delta}$

wherein, in Chemical Formula 1,
A is selected from Y, Sc, La and lanthanide series elements,
B is Cr, Mn, Fe, Co, Ni, Mo, Ru or Rh,
x is a real number of 0 or more and less than 1,
y is a real number of 0 or more and less than 0.5,
$\delta$ is a real number of 0 or more and less than 1, and
$(x + y) > 0$ is satisfied.

3. The catalyst of claim 2, wherein the first coating layer is a single layer composed of a composite oxide comprising two or more of Al, Ce, Zr, Y, Ti and Si.

4. The catalyst of claim 3, wherein the composite oxide is yttria-stabilized zirconia (YSZ), $Al_2O_3$-$CeO_2$, $Al_2O_3$-$ZrO_2$, $CeO_2$-$ZrO_2$, $Al_2O_3$-$TiO_2$, $CeO_2$-$TiO_2$ or $CeO_2$-$ZrO_2$-$Al_2O_3$.

5. The catalyst of claim 2, wherein the first coating layer has a double layer structure composed of a first inorganic oxide layer comprising one or more of Al, Ce, Zr, Y, Ti and Si; and a second inorganic oxide layer comprising one or more of Al, Ce, Zr, Y, Ti and Si, and
the first inorganic oxide layer and the second inorganic oxide layer comprise different inorganic oxides.

6. The catalyst of claim 1 or 2, wherein the porous metal support is a metal foam comprising NiCrAlFe, NiCrAl, SiC or $\alpha$-$Al_2O_3$.

7. The catalyst of claim 1 or 2, wherein a content of the second coating layer comprising the perovskite-based compound represented by Chemical Formula 1 is 3 wt% to 40 wt% based on a total weight of the catalyst for methane reformation.

8. The catalyst of claim 1 or 2, wherein the catalyst for methane reformation is applied to a steam reforming process, a carbon dioxide ($CO_2$) reforming process, a catalytic partial oxidation process, an autothermal reforming process, a tri-reforming process or a mixed reforming process.

9. A method for producing a catalyst for methane reformation, the method comprising:

preparing each of a first solution comprising a precursor of an inorganic oxide; and a second solution comprising a precursor of a perovskite-based compound represented by the following Chemical Formula 1;
producing a catalyst precursor provided with a first coating layer by coating a porous metal support with the first solution, and then performing a first heat treatment process; and
producing a catalyst provided with a second coating layer by coating the catalyst precursor provided with the first coating layer with the second solution, and then performing a second heat treatment process,
wherein the precursor of the inorganic oxide is a precursor of $CeO_2$; a precursor of $Al_2O_3$; or a precursor of a composite oxide comprising two or more of Al, Ce, Zr, Y, Ti and Si:

[Chemical Formula 1]     $Sr_{1-x}A_xTi_{1-y}B_yO_{3-\delta}$

wherein, in Chemical Formula 1,
A is selected from Y, Sc, La and lanthanide series elements,
B is Cr, Mn, Fe, Co, Ni, Mo, Ru or Rh,
x is a real number of 0 or more and less than 1,
y is a real number of 0 or more and less than 0.5,
$\delta$ is a real number of 0 or more and less than 1, and
$(x + y) > 0$ is satisfied.

10. A method for producing a catalyst for methane reformation, the method comprising:

preparing each of a 1-1 solution comprising a precursor of a first inorganic oxide; a 1-2 solution comprising a precursor of a second inorganic oxide; and a second solution comprising a precursor of a perovskite-based compound represented by the following Chemical Formula 1;
producing a catalyst precursor provided with a first inorganic oxide layer by coating a porous metal support with the 1-1 solution, and then performing a 1-1 heat treatment process;
producing a catalyst precursor provided with a second inorganic oxide layer by coating the catalyst precursor provided with the first inorganic oxide layer with the 1-2 solution, and then performing a 1-2 heat treatment process; and
producing a catalyst provided with a second coating layer by coating the catalyst precursor provided with the second inorganic oxide layer with the second solution, and then performing a second heat treatment process, wherein the precursor of the first inorganic oxide and the precursor of the second inorganic oxide are different from each other, and are each independently a precursor of an inorganic oxide comprising one or more of Al, Ce, Zr, Y, Ti and Si:

[Chemical Formula 1]     $Sr_{1-x}A_xTi_{1-y}B_yO_{3-\delta}$

wherein, in Chemical Formula 1,
A is selected from Y, Sc, La and lanthanide series elements,
B is Cr, Mn, Fe, Co, Ni, Mo, Ru or Rh,
x is a real number of 0 or more and less than 1,
y is a real number of 0 or more and less than 0.5,
$\delta$ is a real number of 0 or more and less than 1, and
$(x + y) > 0$ is satisfied.

11. The method of claim 9 or 10, wherein the porous metal support is a metal foam comprising NiCrAlFe, NiCrAl, SiC or $\alpha$-$Al_2O_3$.

12. The method of claim 9, wherein the first coating layer comprises $CeO_2$; $Al_2O_3$; or a composite oxide comprising two or more of Al, Ce, Zr, Y, Ti and Si.

13. The method of claim 12, wherein the composite oxide is yttria-stabilized zirconia (YSZ), $Al_2O_3$-$CeO_2$, $Al_2O_3$-$ZrO_2$, $CeO_2$-$ZrO_2$, $Al_2O_3$-$TiO_2$, $CeO_2$-$TiO_2$ or $CeO_2$-$ZrO_2$-$Al_2O_3$.

## INTERNATIONAL SEARCH REPORT

| International application No. |
|---|
| **PCT/KR2023/013633** |

| A. | CLASSIFICATION OF SUBJECT MATTER |
|---|---|

**B01J 23/00**(2006.01)i; **B01J 23/02**(2006.01)i; **B01J 23/10**(2006.01)i; **B01J 21/02**(2006.01)i; **B01J 21/06**(2006.01)i; **B01J 23/755**(2006.01)i; **B01J 37/02**(2006.01)i; **B01J 37/08**(2006.01)i; **C01B 3/40**(2006.01)i

According to International Patent Classification (IPC) or to both national classification and IPC

| B. | FIELDS SEARCHED |
|---|---|

Minimum documentation searched (classification system followed by classification symbols)

B01J 23/00(2006.01); B01J 21/06(2006.01); B01J 23/46(2006.01); B01J 23/63(2006.01); B01J 23/75(2006.01); B01J 23/755(2006.01); B01J 35/04(2006.01); B01J 37/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 다공성 금속 지지체(porous metal support), 페로브스카이트(perovskite), 코팅층(coating layer), 촉매(catalyst), 메탄개질(methane reforming)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2002-0080387 A (BATTELLE MEMORIAL INSTITUTE) 23 October 2002 (2002-10-23) See claims 1, 9 and 10, and paragraphs [0018]-[0021] and [0028]-[0032]. | 1-13 |
| Y | KR 10-2018-0136701 A (KOREA INSTITUTE OF SCIENCE AND TECHNOLOGY) 26 December 2018 (2018-12-26) See claims 1, 6 and 8, and paragraph [0044]. | 1-13 |
| A | KR 10-2014-0087239 A (RESEARCH INSTITUTE OF INDUSTRIAL SCIENCE & TECHNOLOGY et al.) 09 July 2014 (2014-07-09) See claims 1-11. | 1-13 |
| A | KR 10-2017-0060531 A (KOREA RESEARCH INSTITUTE OF CHEMICAL TECHNOLOGY) 01 June 2017 (2017-06-01) See claims 1-9. | 1-13 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 December 2023** | **20 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/013633** |

**C.      DOCUMENTS CONSIDERED TO BE RELEVANT**

| Category* | Citation of document, with indication, where appropriate, of the relevant passages | Relevant to claim No. |
| --- | --- | --- |
| A | KR 10-2013-0074843 A (RESEARCH INSTITUTE OF INDUSTRIAL SCIENCE & TECHNOLOGY) 05 July 2013 (2013-07-05) <br> See claims 1-11. | 1-13 |

Form PCT/ISA/210 (second sheet) (July 2022)

# EP 4 606 474 A1

**INTERNATIONAL SEARCH REPORT**
Information on patent family members

| International application No. |
|---|
| **PCT/KR2023/013633** |

| Patent document cited in search report | | | Publication date (day/month/year) | Patent family member(s) | | | Publication date (day/month/year) |
|---|---|---|---|---|---|---|---|
| KR | 10-2002-0080387 | A | 23 October 2002 | AT | 303866 | T | 15 September 2005 |
| | | | | AU | 2001-34666 | A1 | 07 August 2001 |
| | | | | AU | 2001-34666 | B2 | 11 November 2004 |
| | | | | AU | 2001-34666 | C | 07 August 2001 |
| | | | | AU | 2005-200598 | A1 | 10 March 2005 |
| | | | | AU | 2005-200598 | B2 | 20 December 2007 |
| | | | | AU | 3466601 | A | 07 August 2001 |
| | | | | AU | 778052 | B2 | 11 November 2004 |
| | | | | AU | 778052 | C | 01 September 2005 |
| | | | | CA | 2338815 | A1 | 10 February 2000 |
| | | | | CA | 2338815 | C | 18 December 2007 |
| | | | | CA | 2396144 | A1 | 02 August 2001 |
| | | | | CA | 2396144 | C | 19 November 2013 |
| | | | | CN | 1211162 | C | 20 July 2005 |
| | | | | CN | 1400923 | A | 05 March 2003 |
| | | | | DE | 69927162 | T2 | 08 June 2006 |
| | | | | DK | 1100618 | T3 | 09 January 2006 |
| | | | | EP | 1100618 | A1 | 23 May 2001 |
| | | | | EP | 1100618 | B1 | 07 September 2005 |
| | | | | EP | 1257362 | A1 | 20 November 2002 |
| | | | | EP | 1257362 | B1 | 08 May 2013 |
| | | | | EP | 2295140 | A1 | 16 March 2011 |
| | | | | HK | 1053996 | A1 | 14 November 2003 |
| | | | | JP | 2003-512143 | A | 02 April 2003 |
| | | | | JP | 2003-520675 | A | 08 July 2003 |
| | | | | JP | 2012-110894 | A | 14 June 2012 |
| | | | | JP | 4601822 | B2 | 22 December 2010 |
| | | | | JP | 4982717 | B2 | 25 July 2012 |
| | | | | JP | 5964594 | B2 | 03 August 2016 |
| | | | | KR | 10-0670954 | B1 | 11 January 2007 |
| | | | | NO | 20010374 | A | 23 March 2001 |
| | | | | NO | 20010374 | D0 | 23 January 2001 |
| | | | | NO | 20010374 | L | 23 March 2001 |
| | | | | NO | 20023080 | A | 13 September 2002 |
| | | | | NO | 20023080 | D0 | 26 June 2002 |
| | | | | NO | 20023080 | L | 13 September 2002 |
| | | | | RU | 2002120794 | A | 10 January 2004 |
| | | | | RU | 2257955 | C2 | 10 August 2005 |
| | | | | US | 2003-0007904 | A1 | 09 January 2003 |
| | | | | US | 2004-0188326 | A1 | 30 September 2004 |
| | | | | US | 6440895 | B1 | 27 August 2002 |
| | | | | US | 6479428 | B1 | 12 November 2002 |
| | | | | US | 6762149 | B2 | 13 July 2004 |
| | | | | US | 7498001 | B2 | 03 March 2009 |
| | | | | WO | 00-06301 | A1 | 10 February 2000 |
| | | | | WO | 01-54812 | A1 | 02 August 2001 |
| | | | | WO | 01-54812 | B1 | 29 November 2001 |
| KR | 10-2018-0136701 | A | 26 December 2018 | KR | 10-2015299 | B1 | 22 August 2019 |
| KR | 10-2014-0087239 | A | 09 July 2014 | KR | 10-1467405 | B1 | 25 November 2014 |
| KR | 10-2017-0060531 | A | 01 June 2017 | KR | 10-1825495 | B1 | 05 February 2018 |

Form PCT/ISA/210 (patent family annex) (July 2022)

**INTERNATIONAL SEARCH REPORT**
Information on patent family members

International application No.

**PCT/KR2023/013633**

| Patent document cited in search report | Publication date (day/month/year) | Patent family member(s) | | Publication date (day/month/year) |
|---|---|---|---|---|
| | | WO 2017-090864 A1 | | 01 June 2017 |
| KR 10-2013-0074843 A | 05 July 2013 | KR 10-1359990 B1 | | 03 February 2014 |

Form PCT/ISA/210 (patent family annex) (July 2022)

**EP 4 606 474 A1**